# EUROPÄISCHE PATENTANMELDUNG

(11) **EP 1 586 842 A1**
(43) Veröffentlichungstag der Anmeldung: **19.10.2005**
(21) Anmeldenummer: 05005726.4
(22) Anmeldetag: 16.03.2005
(51) Int. Cl.: F28D 19/04, F28D 17/02, F28D 17/04, F28F 27/00, F01N 3/08, F02M 25/07

(54) **Verfahren zum Kühlen von Abgas eines Verbrennungsmotors eines Fahrzeugs sowie Wärmeübertrager**

(30) Priorität: 08.04.2004 DE 102004018037
(71) Anmelder: Behr GmbH & Co. KG, 70469 Stuttgart (DE)
(72) Erfinder: Müller, Daniel, Dipl.-Ing., 70178 Stuttgart (DE); Rogg, Stefan, 70193 Stuttgart (DE)
(74) Vertreter: Grauel, Andreas

(57) **Zusammenfassung**

Die Erfindung betrifft ein Verfahren zum Kühlen von Abgas (A) eines Verbrennungsmotors (38) eines Fahrzeugs, wobei das Abgas (A) mittels eines Wärmeübertragers (1) indirekt luftgekühlt wird. Des Weiteren betrifft sie ein Verfahren, bei dem das Abgas (A) durch regenerative Wärmeübertragung über Kanalwänden (W) des Wärmeübertragers (1) gekühlt wird.

## Beschreibung

Die Erfindung betrifft ein Verfahren zum Kühlen von Abgas eines Verbrennungsmotors eines Fahrzeugs. Des Weiteren betrifft die Erfindung einen zur Durchführung des Verfahrens besonders geeigneten Wärmeübertrager.

Bei Verbrennungsmotoren, z. B. Dieselmotoren, eines Fahrzeugs ist es bekannt, zur Senkung der Schadstoffemission gekühlte Abgasrückführungen vorzusehen. Dabei unterliegt die Wärmeübertragung zur Kühlung des Abgases sehr hohen Anforderungen. Beispielsweise müssen die verwendeten Werkstoffe eine hohe Temperaturfestigkeit aufweisen, da die Abgastemperaturen bei einem Kraftfahrzeug bis zu 800 °C erreichen können. Zudem enthält das Abgas Partikel und korrosive Bestandteile, so dass ein zur Wärmeübertragung eingesetzter Wärmeübertrager gegenüber Verschmutzung und Korrosion hinreichend fest ausgebildet sein muss.

Des Weiteren sind die mechanischen Belastungen des Wärmeübertragers erheblich. So ist der Druck des Abgases relativ hoch und mit starken Schwankungen behaftet. Auch können Temperaturwechselbeanspruchungen des Wärmeübertragers auftreten. Der Wärmeübertrager (auch Abgaskühler genannt) ist in der Regel motorfest montiert und daher hohen Rüttelbeanspruchungen ausgesetzt. Gleichzeitig besteht die Forderung nach einer hinreichend großen Zuverlässigkeit des Wärmeübertragers, da ein Ausfall den Motorbetrieb wesentlich beeinträchtigt und unter Umständen sogar zur Beschädigung oder Zerstörung des Motors führen kann. Daher ist es bekannt, neben den werkstofftechnischen Anforderungen die Kühlleistung des Wärmeübertragers in Abhängigkeit von den jeweiligen Betriebsbedingungen zu regeln. Dabei wird die Rückführrate des Abgases, d. h. die Abgasmenge, die vom Motoraustritt an den Motoreintritt gelangt, mittels eines Ventils in der Abgasrückführung in Abhängigkeit vom Motorkennfeld gesteuert. Ein Rückschlagventil sorgt dafür, dass das Abgas nur vom Motoraustritt zum Motoreintritt strömt.

Aus der DE 195 40 683 A1, der DE 199 62 863 und DE 100 11 954 A1 sind verschiedene Ausführungsbeispiele gekühlter Abgasrückführungen bekannt, bei denen die Kühlung des Abgases durch ein flüssiges Kühlmedium, insbesondere durch Mutorkühlmittel, erfolgt. Für die Versorgung mit Kühlmittel wird ein Kühlmittel-Teilstrom vom Motorkühlkreislauf abgezweigt. Dabei werden als Abgaskühler Wärmeübertrager aus Edelstahl in Rohrbündelweise verwendet. Den verschiedenen Gestaltungsformen der Wärmeübertrager ist dabei zu eigen, dass das Abgas durch die Rohre des Rohrbündels strömt und das Kühlmittel im Mantelraum geführt wird. Zur Erhöhung des Wärmeübergangs sind Turbulenz erzeugende Einprägungen in den Rohren und/oder Umlenkbleche im Mantelraum bekannt.

Die Kühlung des rückgeführten Abgases mit Kühlmittel ist grundsätzlich mit einer Reihe von Problemen verbunden. So ist im Abgaskühler und in den Kühlmittelleitungen zum Abgaskühler eine nicht unerhebliche Menge an Kühlmittel enthalten. Diese zusätzliche Kühlmittelmenge verzögert die Aufheizung des Motors, erhöht das Gewicht des Fahrzeugs und führt durch seinen Gewichtsanteil am Abgaskühler zu erhöhten Kräften bei Rüttelbeanspruchung des Abgaskühlers bzw. seiner Befestigung.

Aufgrund der Einspannung des Rohrbündels im Gehäuse ergeben sich des Weiteren hohe Temperaturwechselbeanspruchungen. Die Temperatur der Rohre verändert sich je nach Motorbetriebspunkt und Abgasrückführrate, während die Temperatur des Gehäuses relativ konstant bleibt.

Zudem kann die Temperaturdifferenz zwischen Kühlmittel und Abgas sehr hohe Werte erreichen. Dies vergrößert die durch die Temperaturwechselbeanspruchung ohnehin vorhandenen Thermospannungen. Es besteht die Gefahr des Siedens des Kühlmittels im Abgaskühler. Um dies zu unterbinden, darf der Kühlmittelstrom einen Mindestwert nicht unterschreiten. Eine Störung der Kühlmittelversorgung des Abgaskühlers kann somit zu einer Schädigung des Abgaskühlers und eventuell sogar des Motors führen.

Durch die Kühlung des Abgases mit Kühlmittel wird auch der Motorkühlkreislauf belastet. In kühlleistungskritischen Betriebszuständen ist daher eine ausreichende Kühlung des Motors und/oder der Abgasrückführung möglicherweise nicht mehr sichergestellt. In manchen Betriebszuständen ist eine ungekühlte Abgasrückführung vorteilhaft, z. B. beim Kaltstart.

Bei einer Anwendung des Wasserkühlsystems im Bereich eines NOx-Speicherkatalysators wird zudem eine Temperaturregelung benötigt, welche besonders aufwendig ist.

Der Erfindung liegt daher die Aufgabe zugrunde, ein Verfahren zum Kühlen von Abgas eines Verbrennungsmotors eines Fahrzeugs anzugeben, welches gegenüber dem Stand der Technik verbessert ist. Des Weiteren ist eine zum Kühlen des Abgases des Verbrennungsmotors besonders einfach gestalteter Wärmeübertrager anzugeben.

Die erstgenannte Aufgabe wird erfindungsgemäß gelöst durch die Merkmale des Anspruchs 1. Die Aufgabe hinsichtlich des Wärmeübertragers wird erfindungsgemäß gelöst durch die Merkmale des Anspruchs 11. Vorteilhafte Weiterbildungen sind Gegenstand der Unteransprüche.

Die Erfindung geht dabei von der Überlegung aus, dass eine Gestaltungsform für eine gekühlte Abgasrückführung vorgeschlagen werden sollte, die eine Reduzierung der mechanischen Beanspruchung des Abgaskühlers auch bei Druck- und Temperaturwechsel ermöglicht. Zudem sollten Rüttelbeschleunigungen auf ein Minimum reduziert werden. Hierzu ist vorgesehen, anstelle eines flüssigen Kühlmediums, wie dem bekannten Motorkühlmittel, als Kühlmedium Luft zu verwenden. Dabei wird das Abgas vorzugsweise mittels eines Wärmeübertragers indirekt luftgekühlt. Dadurch ist sichergestellt, dass zur Motorkühlung vorgesehene Kühlkreisläufe, wie z. B. der Kühlmittelkreislauf, unbeeinflusst bleiben. Auch weist eine derartige luftgekühlte Abgasrückführung einen hinreichend geringen Bauraumbedarf auf. Zudem ist die Kühlung des rückgeführten Abgases in möglichst weiten Grenzen regelbar.

Bevorzugt wird Luft aus der Luftversorgung des Verbrennungsmotors als Kühlmedium verwendet. Dabei wird anstelle einer rekuperativen Wärmeübertragung das Abgas vorzugsweise durch regenerative Wärmeübertragung über Kanalwänden des Wärmeübertragers gekühlt. Hierzu ist der Wärmeübertrager bevorzugt nach dem Prinzip eines Ljungström-Luftvorwärmers ausgeführt.

In einer möglichen Ausführungsform wird der Wärmeübertrager alternierend von Abgas oder von Luft durchströmt. Mit anderen Worten: Der Wärmeübertrager wird zeitlich abwechselnd von Abgas und vom Kühlmedium, der Luft, durchströmt. Die Wärmeübertragung wird insbesondere durch die Speicherung der Wärme des Abgases in den Kanalwänden bewirkt.

Für eine abwechselnde Durchströmung des Wärmeübertragers mit Luft oder Abgas weist der Wärmeübertrager einen eine Vielzahl von Kanälen umfassenden Zylinder auf, der mit einer vorgegebenen Drehzahl um eine Achse rotiert wird. Dabei wird der Wärmeübertrager im Querschnitt teilweise mit Abgas und teilweise mit Luft beaufschlagt. Beispielsweise wird die obere Zylinderhälfte, insbesondere deren Kanäle, mit Luft beaufschlagt, die untere Zylinderhälfte, insbesondere deren Kanäle, wird mit Abgas beaufschlagt. Bei einer Drehzahl von null, d. h. der Zylinder steht, wird keine Wärme übertragen. Mit steigender Drehzahl nimmt die Wärmeleistung zu. Daher kann die übertragene Wärmemenge in Abhängigkeit von der Drehzahl des rotierenden Zylinders gesteuert werden.

Alternativ zur Ausführung des Wärmeübertragers mit einem rotierenden Zylinder kann der Zylinder statisch angeordnet sein. In diesem Ausführungsbeispiel rotieren dann endseitig jeweils am Zylinder angeordnete Zuführungen und Abführungen für die Luft und das Abgas mit einer vorgegebenen Drehzahl synchron um eine Achse. Dabei wird die übertragene Wärmemenge in Abhängigkeit von der Drehzahl der rotierenden Zuführungen und Abführungen gesteuert.

Für eine hinreichend große Wärmeübertragung wird als Luft Ladeluft oder Frischluft verwendet. Dabei wird die Frischluft komprimiert bzw. gefördert. Unter Ladeluft wird insbesondere die einer Verdichterstufe eines Abgasturboladers entnommene verdichtete und somit erhitzte Luft verstanden. Zum Zwecke einer möglichst guten Abkühlung des Abgases durch Ladeluft kann die Ladeluft vor Einströmung in den Wärmeübertrager mittels eines Ladeluftkühlers gekühlt werden. Für eine Nutzung der Wärme des Abgases wird z. B. die vom Abgas aufgewärmte Luft dem Fahrzeuginnenraum zur Beheizung zugeführt. Zweckmäßigerweise wird die aufgewärmte Luft vor Eintritt in den Fahrzeuginnenraum gefiltert.

Bezüglich des Wärmeübertragers ist dieser mit einem Wärmeübertragungsbereich versehen, der primärseitig in einer Abgasrückführung und sekundärseitig in einer Luftzuführung des Verbrennungsmotors angeordnet ist. Hierdurch ist eine luftgekühlte Abgasrückführung ermöglicht. Dabei ist der Wär meübertrager nach dem Prinzip eines Ljungström-Luftvorwärmers ausgeführt. Bevorzugt ist der Wärmeübertragungsbereich durch einen Zylinder mit einer Vielzahl von Kanälen gebildet, über deren Kanalwände das Abgas durch regenerative Wärmeübertragung kühlbar ist. Je nach Art und Ausführung des Wärmeübertragers können die Kanäle durch ihre Anordnung zueinander den Zylinder bilden oder zusätzlich von einem Zylinder umgeben sein.

Zweckmäßigerweise sind die Kanäle im Zylinder parallel zueinander angeordnet und verlaufen entlang der Strömungsrichtung. Dabei ist der Zylinder strömungseingangsseitig und strömungssausgangsseitig mit Zuführungen bzw. Abführungen für das Abgas und die Luft versehen. Für eine indirekte Wärmeübertragung über die Kanalwandungen sind die Kanäle alternierend vom heißen Abgas oder von kühler Luft durchströmbar. Dabei ist das Abgas einer Teilanzahl von Kanälen zuführbar und die Luft einer benachbarten Teilanzahl von Kanälen zuführbar. Durch Rotation der Kanäle um eine Drehachse werden somit die Kanäle zeitweise von Abgas und zeitweise von Luft durchströmt. Die Wärmeübertragung ist dabei von der Temperaturdifferenz abhängig. Vielmehr ist zur Erhöhung der Wärmeleistung der Zylinder um eine Längsachse rotierbar angeordnet. Durch Änderung der Drehzahl wird die Wärmeleistung eingestellt und geregelt.

In einer möglichen Ausführungsform ist der Zylinder über einen riemengesteuerten Antrieb in eine Drehbewegung versetzbar. Dabei umfasst der riemengesteuerte Antrieb einen Motor zur Ansteuerung einer Welle, die mit einem den Zylinder umgebenden Riemen verbunden ist. Alternativ ist der Zylinder über einen zahnradgesteuerten Antrieb in eine Drehbewegung versetzbar. Dabei umfasst der zahnradgesteuerte Antrieb einen Motor zur Ansteuerung einer Welle, die mit einem Zahnrad versehen ist, das in einen den Zylinder umgebenden Zahnkranz eingreift.

Zweckmäßigerweise ist abgasseitig ein Bypass für Luft, insbesondere gekühlte Luft, im Wärmeübertrager der Abgasrückführung integriert. Insbesondere bildet der Zylinder selbst einen Bypass, wenn der Zylinder nicht rotiert, sondern steht. Hierdurch ist ein Aufheizen des Wärmeübertragers bzw. Abkühlung des Abgases sicher vermieden.

Vorzugsweise ist der Wärmeübertrager, insbesondere die Innenwandung der Kanäle, mit einer katalytischen Beschichtung versehen. Hierdurch werden die im Abgasstrom enthaltenen Anteile an Rußpartikeln und Kohlenwasserstoffen oxidiert.

In einer weiteren möglichen Ausführungsform ist abgasseitig dem Wärmeübertrager ein Speicherkatalysator, insbesondere ein NOx-Katalysator, nachgeschaltet. Alternativ kann im Wärmeübertrager ein Speicherkatalysator, insbesondere ein NOx-Katalysator, integriert sein. Für eine effiziente Umwandlung von Stickoxiden wird der Speicherkatalysator vorzugsweise Temperatur geregelt. Um eine Schädigung des Speicherkatalysators aufgrund von hohen Temperaturen von 750°C bis 800°C, wie sie bei hohen Motordrehzahlen auftreten können, zu vermeiden, wird die Temperaturregelung einer Regelung der Motordrehzahl unterlagert. Mit anderen Worten: Die Regelung des Temperaturbereichs oder -fensters des Speicherkatalysators erfolgt über eine gesteuerte Temperaturregelung der Motordrehzahl.

Die mit der Erfindung erzielten Vorteile bestehen insbesondere darin, dass durch die Verwendung von Luft anstelle von Motorkühlmittel als Kühlmedium zur Kühlung eines zum Motor rückgeführten Abgases die mechanische Beanspruchung des auch als Abgaskühlers bezeichneten Wärmeübertragers nach dem Ljungström-Prinzip durch Druck- und Temperaturschwankungen bzw. durch Rüttelbeschleunigungen reduziert ist. Zudem ist durch eine luftgekühlte Abgasrückführung ein Einfluss auf die zur Motorkühlung vorgesehenen Kühlkreisläufe, wie den Kühlmittelkreislauf, sicher vermieden.

Ausführungsbeispiele der Erfindung werden anhand einer Zeichnung näher erläutert. Darin zeigen:
- Fig. 1A bis 1C: schematisch einen Wärmeübertrager zur Kühlung von Abgas eines Verbrennungsmotors eines Fahrzeugs mit einem um eine Achse rotierbaren Zylinder,
- Fig. 2: ein Diagramm über den zeitlichen Verlauf der Wärmespeicherung in Abhängigkeit vom Werkstoff und der Geometrie des Wärmeübertragers,
- Fig. 3A bis 3C: schematisch eine alternative Ausführungsform eines Wärmeübertragers zur Kühlung von Abgas mit einem altemativen Antrieb zum Drehen des Zylinders,
- Fig.4: schematisch ein Ansaugluft- und Abgassystem eines Verbrennungsmotors mit einem in einer Abgasrückführung angeordneten Wärmeübertrager und einem in einer Luftzuführung angeordneten Ladeluftkühler,
- Fig. 5: ein Diagramm zur Regelung der Wärmeleistung in Abhängigkeit von der Drehzahl des rotierbaren Zylinders des Wärmeübertragers,
- Fig. 6: schematisch ein alternatives Ansaugluft- und Abgassystem eines Verbrennungsmotors mit einem in einer Abgasrückführung angeordneten alternativen Wärmeübertrager und einem in einer Luftzuführung angeordneten Ladeluftkühler,
- Fig. 7A bis 7D: schematisch eine alternative Ausführungsform für einen Wärmeübertrager zur Kühlung von Abgas mit einem stehenden Zylinder und rotierbaren Zu- und Abführungen,
- Fig. 8 bis 9: schematisch alternative Ansaugluft- und Abgassysteme eines Verbrennungsmotors mit einem in einer Abgasrückführung und einer Frischluftzuführung angeordneten Wärmeübertrager mit oder ohne katalytischer Beschichtung,
- Fig. 10: schematisch ein alternatives Ansaugluft- und Abgassystem eines Verbrennungsmotors mit einem in einer Abgasrückführung angeordneten Wärmeübertrager und einem in einer Luftzuführung angeordneten Ladeluftkühler,
- Fig. 11A: ein Diagramm mit mehreren Wärmeleistungs-Abgasmassenstrom-Funktionen für verschieden ausgebildete Wärmeübertrager,
- Fig. 11 B: ein Diagramm mit mehreren Druck-Abgasmassenstrom-Funktionen für verschieden ausgebildete Wärmeübertrager, und
- Fig. 12 bis 15: schematisch verschiedene Ausführungsformen für einen Wärmeübertrager mit einem integrierten oder nachgeschalteten Speicherkatalysator.

Einander entsprechende Elemente und Bauteile sind in allen Figuren mit den gleichen Bezugszeichen versehen.

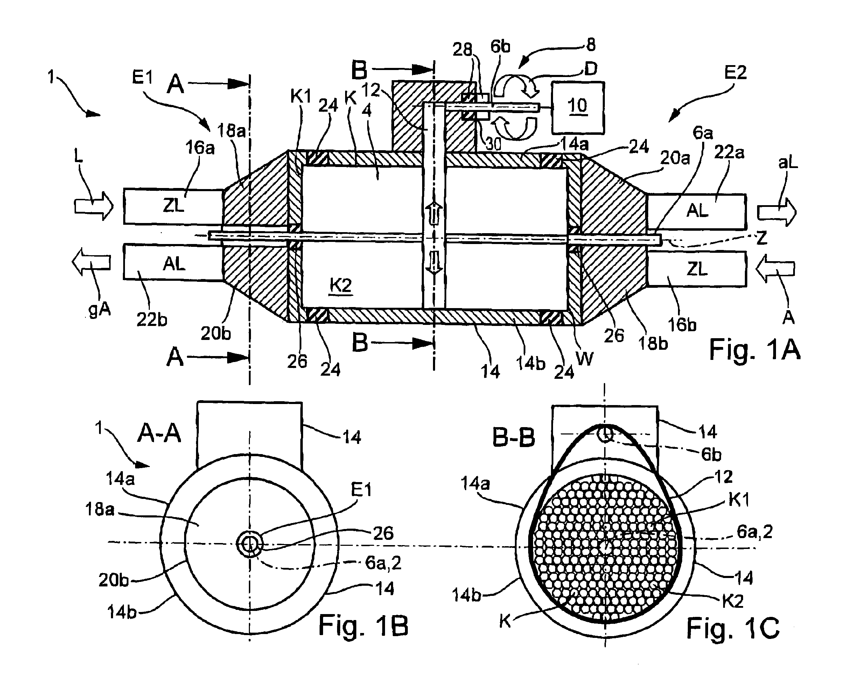

Fig. 1A zeigt einen Wärmeübertrager 1 (auch Abgaskühler genannt) zur Kühlung von Abgas A indirekt mittels Luft L. Der Wärmeübertrager 1 umfasst einen um eine Achse 2 rotierbaren Zylinder 4. Der Wärmeübertrager 1 ist nach dem so genannten Ljungström-Prinzip aufgebaut.

Dabei wird das heiße, durch den Wärmeübertrager 1 strömende Abgas A durch regenerative Wärmeübertragung mittels der kalten Luft L gekühlt. Hierzu wird der Wärmeübertrager 1 zeitlich abwechselnd vom Abgas A bzw. von der Luft L durchströmt. Zusätzlich strömen die Luft L und das Abgas A mit entgegengesetzter Strömungsrichtung durch den Wärmeübertrager 1. Dies ermöglicht eine hinreichend hohe Wärmeübertragung. Zum Durchströmen des Wärmeübertragers 1 mit Luft L und Abgas A sind im Anschlussbereich E1 und E2 Zuführungen ZL und Abführungen AL vorgesehen.

Der Zylinder 4 weist eine Anzahl von in Längsrichtung des Wärmeübertragers 1 verlaufenden Kanäle K auf. Mehrere Kanäle K können dabei zu einem Kanalbündel K1 und K2 zusammengefasst sein. Die Kanäle K bzw. die Kanalbündel K1 und K2 können dabei derart angeordnet sein, dass diese selbst in ihrer Außenform einen Zylinder 4 bilden. Alternativ können die Kanäle K in einem Zylinder 4, d. h. einem Hohlkörper, angeordnet sein. Zwischen den Kanalbündeln K1 und K2 kann der Zylinder 4 eine nicht näher dargestellte Trenn- oder Säuberungszone aufweisen. Die Wärmeübertragung wird durch die Speicherung der Wärme in den Kanalwänden W der Kanäle K und durch die Rotationsbewegung des Zylinders 4 bewirkt. Dazu wird die Luft L im Querschnitt des Zylinders 4 gesehen nur einem Teilbereich, z. B. einer Zylinderhälfte, des Zylinders 4 zugeführt. Das Abgas A wird dem anderen Teilbereich des Zylinders 4. d. h. der anderen Zylinderhälfte im Querschnitt gesehen, zugeführt.

Der Zylinder 4 ist drehbar auf einer ersten Welle 6a gelagert. Dabei wird der Zylinder 4 über einen riemengesteuerten Antrieb 8 in eine Drehbewegung D mit einer vorgebbaren Drehzahl n versetzt. Der riemengesteuerte Antrieb 8 umfasst einen Motor 10, der über eine parallel zur ersten Welle 6a angeordneten zweiten Welle 6b den Zylinder 4 in die Drehbewegung D versetzt. Dazu ist die zweite Welle 6b mit einen den Zylinder 4 umgebenden Riemen 12 verbunden. Der Motor 10 ist beispielsweise ein elektrischer, pneumatischer, hydraulischer oder hydrostatischer Antrieb. Alternativ kann die erforderliche Drehbewegung D durch Ankopplung an den Verbrennungsmotor bewirkt werden. Die Drehrichtung kann beliebig gewählt werden. Statt eines Riemens 12 kann auch eine Kette, ein Band oder Ähnliches verwendet werden.

Der Zylinder 4 mit den Kanälen K ist von einem Gehäuse 14 umgeben. Die Luft L (= Kühlmedium) strömt über einen zugehörigen Anschlussstutzen 16a und einen daran anschließenden Diffusor 18a in das Gehäuse 14 ein. Der Diffusor 18a verteilt dabei die Luft L auf eine Gehäusehälfte 14a. Hierzu ist der Wärmeübertrager 1 zweigeteilt ausgebildet, d. h. das Gehäuse 14 ist unterteilt in zwei Zylinderhälften, in denen jeweils ein Kanalbündel 1 a und 1b des Zylinders 4 angeordnet ist, wobei die obere Gehäusehälfte 14a von Luft L und die untere Gehäusehälfte 14b vom Abgas A durchströmt wird. Vorzugsweise wird der Motor 10 im Bereich der vom Kühlmedium - der Luft L - durchströmten Gehäusehälfte 14a angeordnet. Hierdurch ist die Temperaturbelastung des Motors 10 niedrig gehalten.

Beim Betrieb des Wärmeübertragers 1 wird die über den zugehörigen Anschlussstutzen 16a einströmende Luft L mittels des zugehörigen Diffusors 18a auf das in dieser Gehäusehälfte 14a befindliche Kanalbündel 1a verteilt. Beim Durchströmen des Kanalbündels 1 a des Zylinders 4 wird die Luft L mittels des Abgases A indirekt aufgewärmt. Anschließend tritt die Luft L strömungsausgangsseitig in einen zugehörigen Sammler 20a ein, der die aufgewärmte Luft aL bündelt und über einen Austrittsstutzen 22a abführt.

Das mit entgegengesetzter Strömungsrichtung den Wärmeübertrager 1 durchströmende heiße Abgas A strömt über einen zugehörigen Anschlussstutzen 16b und einen zugehörigen Diffusor 18b in den Wärmeübertrager 1 und in die untere Gehäusehälfte 14b ein. Der zugehörige Diffusor 18b verteilt das Abgas A auf die untere Gehäusehälfte 14b und auf das in dieser Gehäusehälfte 14b momentan befindliche Kanalbündel 1b. Das Abgas A durchströmt das Kanalbündel 1b und kühlt sich dabei ab und tritt über einen zugehörigen Sammler 20b, der das aus der unteren Gehäusehälfte 14b strömende abgekühlte Abgas bündelt und über einen zugehörigen Austrittsstutzen 22b abführt.

Um zu verhindern, dass das Abgas A und die Luft L durch einen zwischen den Gehäusehälften 14a und 14b vorhandenen Spalt, insbesondere einen zwischen der Innenwand des Gehäuses 14 und der Außenwand des Zylinders 4 oder der Kanalbündel K1 bzw. K2 vorhandenen Spalt hindurch treten kann, sind Ringdichtungen 24 vorgesehen. Um im Bereich der Ringdichtungen 24 eine gute Dichtwirkung zu erzielen, kann das jeweilige Kanalbündel K1 und K2 im Bereich der Ringdichtungen 24 mit einer Manschette versehen sein, auf der die Ringdichtung 24 gleitet.

Um eine Vermischung von aufgewärmter Luft aL und heißem Abgas A zu vermeiden, ist zwischen dem Diffusor 18a der Luft L und dem Sammler 22b des gekühlten Abgases A eine Dichtung 26, insbesondere eine Schleifdichtung, vorgesehen. Die Dichtung 26 dichtet dabei zum einen zur Trennebene zwischen dem Diffusor 18a und dem Sammler 22b ab. Zum anderen dichtet die Dichtung 26 auch zu den Kanalbündeln K1, K2 ab. Analog dazu ist auf dem anderen Ende des Wärmeübertragers 1 zur Verhinderung der Durchmischung von aufgewärmter Luft aL mit heißem Abgas A im Bereich zwischen dem betreffenden Diffusor 18b und dem betreffenden Sammler 20a eine Dichtung 26, insbesondere eine Schleifdichtung, angeordnet. Zusätzlich ist der Wärmeübertrager 1 mit einer Wellendichtung 28 am Durchtritt 30 durch das Gehäuse 14 zur zweiten Welle 6b abgedichtet.

Die Figuren 1B und 1C zeigen jeweils einen Querschnitt durch den Wärmeübertrager 1 gemäß Fig. 1A im Bereich des strömungseingangsseitigen Diffusors 18a des Abgases A und des strömungsausgangsseitigen Sammlers 20b für die aufgewärmte Luft aL bzw. im Bereich des riemengesteuerten Antriebs 8.

Beim Betrieb des regenerativen Abgaskühlers oder Wärmeübertragers 1 wird der Zylinder 4 mit den Kanälen K um die Drehachse 2 mit der Drehzahl n gedreht. Dadurch befindet sich jedes Kanalbündel K1 bzw. K2 für eine Zeitdauer 1/2n in der jeweiligen Gehäusehälfte 14a bzw. 14b und wird einmal vom Abgas A bzw. von der Luft L durchströmt. Beim Durchströmen der Kanäle K des betreffenden Kanalbündels K1 bzw. K2 mit dem heißen Abgas A werden die Kanalwände W erwärmt. Anschließend werden die vom heißen Abgas A erwärmten Kanäle K des Kanalbündels K1 für die Zeitdauer 1/2n durch Drehen des Zylinders 4 in diejenige Gehäusehälfte 14a gedreht, die vom Kühlmedium, der kalten Luft L, durchströmt wird. D. h. die erwärmten Kanäle K des Kanalbündels K1 werden nun von der kalten Luft L durchströmt, wobei sich die Kanalwände W wieder abkühlen, so dass sie bei der nächsten Drehung wieder Wärme vom Abgas A aufnehmen können.

Die Geschwindigkeit, mit der sich die Kanalwände W erwärmen, und die Wärmemenge, die dadurch in den Kanalwänden W gespeichert wird, hängen von der Wärmeleitfähigkeit, der Wärmekapazität und der Dichte des Wandmaterials der Kanalwände W sowie von der Drehzahl n ab. Zudem hängt die speicherbare Wärmemenge auch von der Wandstärke und vom Wärmeübergangskoeffizienten der Wandoberfläche ab.

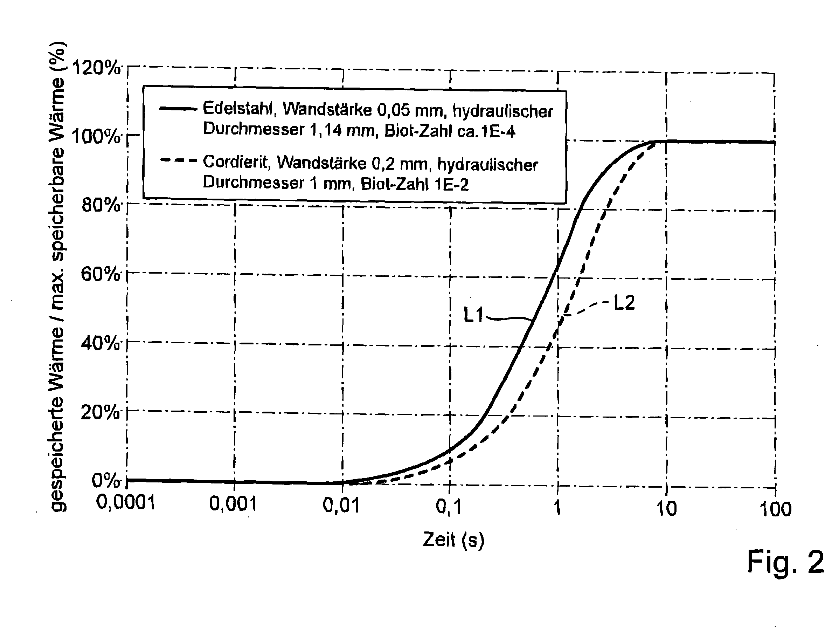

Fig. 2 zeigt beispielhaft einen zeitlichen Verlauf der Wärmespeicherung in Abhängigkeit vom Werkstoff und der Geometrie der Kanalwände W. Die durchgezogene Kennlinie L1 zeigt die mögliche speicherbare Wärmemenge für eine aus Edelstahl gefertigte Kanalwand W mit einer Wandstärke von 0,05 mm bei einem Kanaldurchmesser von 1,14 mm. Die gestrichelte Kennlinie L2 zeigt die mögliche speicherbare Wärmemenge für eine aus Cordierit gefertigte Kanalwand W mit einer Wandstärke von 0,2 mm und einem Kanaldurchmesser von 1,0 mm. Um eine optimale Wärmeleistung bei geringem Druckabfall und kompakter Bauform zu erzielen, weist der Wärmeübertrager 1 folgende beispielhafte Abmessungen auf. Der hydraulische Durchmesser der Kanäle K kann zwischen 1,0 mm und 1,5 mm liegen. Die Wandstärke der Kanalwandung W sollte höchstens 0,3 mm betragen, wobei das Verhältnis von Länge zu hydraulischem Durchmesser der Kanalbündel 1 a, 1 b beispielsweise im Bereich zwischen 2 und 4 liegt. Zusätzlich kann das jeweilige Kanalbündel K1 und K2 katalytisch beschichtet sein, insbesondere sind die Innenwände der Kanäle K katalytisch beschichtet.

Die Kanäle K sind besonders temperaturbeständig und korrosionsfest auszuführen. Hierzu sind die Kanäle K beispielsweise aus hochlegierten Stahl. Titan, Keramik, Silikatglas oder Aluminiumoxid gebildet. Die Kanäle K sind derart zueinander angeordnet, dass sie mit ihren Außenwänden den Zylinder 4 bzw. die beiden Kanalbündel K1 und K2 (= zwei Zylinderhälften) des Zylinders 4 bilden. Bei metallischen Werkstoffen kann das jeweilige Kanalbündel K1 und K2 aus einer Wicklung geformt sein, in der sich eine geprägte und eine glatte Blechlage abwechseln, wobei die daraus resultierenden Hohlräume die Kanäle K bilden. Die eingeprägte Struktur kann beispielsweise die Form von Wellen, Mäandern oder einer Zickzacklinie aufweisen. Dabei werden die Kanäle K durch die Struktur, die entlang der Zylinderachse oder Drehachse 2 verläuft, gebildet.

Je nach Einsatz des Wärmeübertragers 1 in einem Personenkraftfahrzeug oder einem Nutzfahrzeug variieren die Abmessungen sowie das Material bedingt durch die verschieden hohen mechanischen Belastungen und Temperaturbeanspruchungen. Die hier genannten Abmessungen und Materialien sind Beispiele; es können auch andere geeignete Abmessungen oder Materialien eingesetzt werden.

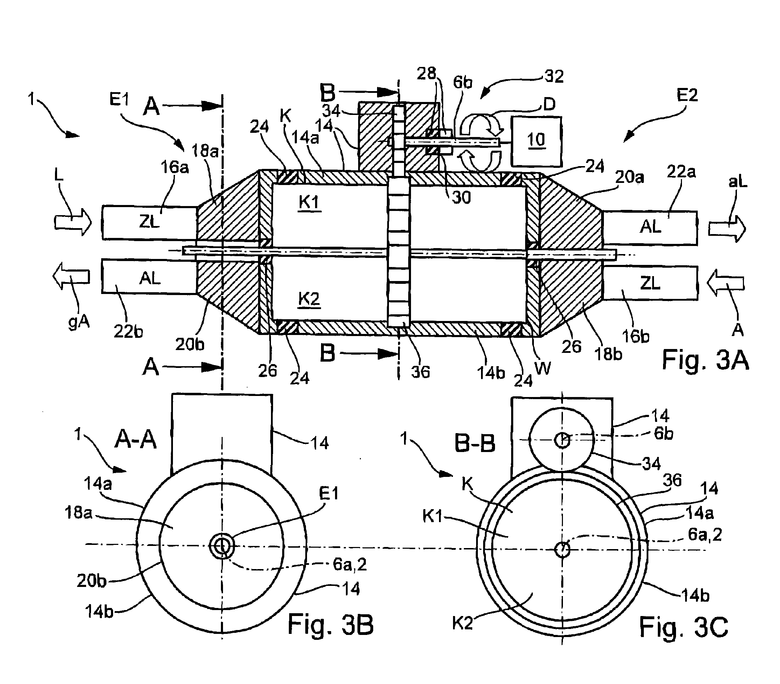

Fig. 3A zeigt eine alternative Ausführungsform eines Wärmeübertragers 1 zur Kühlung von Abgas A mit einem alternativen Antrieb zum Drehen des Zylinders 4. Der Antrieb ist dabei als ein zahnradgesteuerter Antrieb 32 ausgebildet. Der zahnradgesteuerte Antrieb 32 umfasst den Motor 10 zur Ansteuerung der zweiten Welle 6b, die mit einem Zahnrad 34 versehen ist, das in einen den Zylinder 4 umgebenden Zahnkranz 36 eingreift. Der Zahnkranz 36 umschließt dabei den aus den Kanälen K gebildeten Zylinder 4 konzentrisch. Alternativ zum Zahnrad 34 kann auch ein Reibrad verwendet werden, wobei dann der Zahnkranz 36 durch eine konzentrische Manschette ersetzt wird. Figuren 3B und 3C zeigen analog zu Figuren 1 B und 1 C einen Querschnitt im Diffusor-Sammler-Bereich bzw. im Antriebs-Bereich des Wärmeübertragers 1.

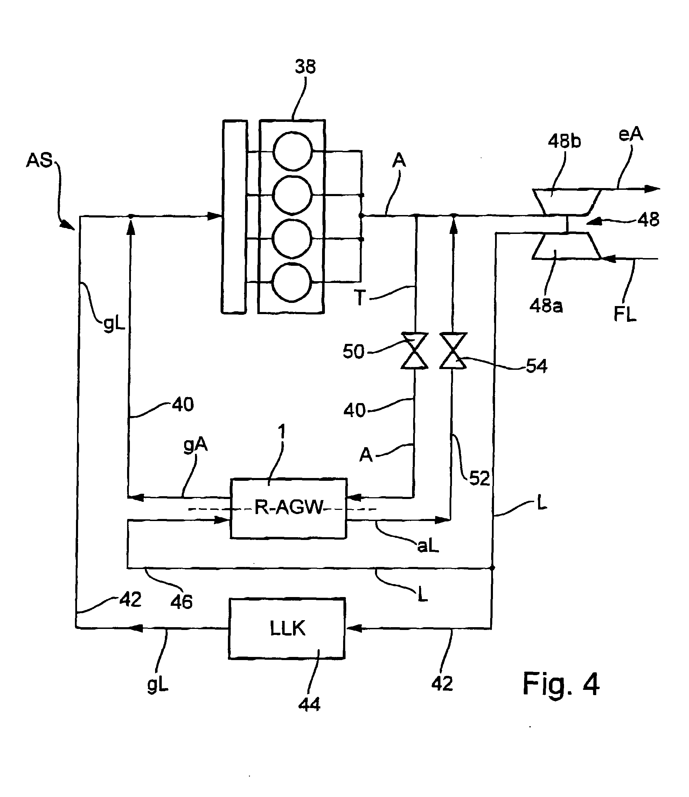

Fig. 4 zeigt schematisch ein Schaltschema für Ansaugluft- und Abgassystem AS eines Verbrennungsmotors 38, z. B. eines Dieselmotors. Das Ansaugluft- und Abgassystem AS weist eine Abgasrückführung 40 auf, in welcher der Wärmeübertrager 1 gemäß den verschiedenen Ausführungsformen angeordnet ist. Parallel zur Abgasrückführung 40 ist eine Luftzuführung 42 angeordnet, in welche zur Kühlung von Luft L, insbesondere von Ladeluft für den Verbrennungsmotor 38, ein Ladeluftkühler 44 angeordnet ist. Zur Kühlung des Abgases A ist der Wärmeübertrager 1 primärseitig in der Abgasrückführung 40 und sekundärseitig in einer von der Luftzuführung 42 abgehende Abzweigleitung 46 geschaltet.

In einer möglichen Ausführungsform wird die Luft L einer Verdichterstufe 48a eines Abgasturboladers 48 als verdichtete und somit warme Luft entnommen. Der Verdichterstufe 48a wird Frischluft FL zugeführt und dort verdichtet. Die bei der Verdichtung erhitzte Luft L wird dem Ladeluftkühler 44 zugeführt und dort abgekühlt und als abgekühlte Ladeluft gL dem Verbrennungsmotor 38 zugeführt. Das aus dem Verbrennungsmotor 38 austretende Abgas A wird in eine Turbinenstufe 48b des Abgasturboladers 48 geleitet, wo die Nutzarbeit zum Antrieb der Verdichterstufe 48a entnommen wird. Das in der Turbinenstufe 48b entspannte Abgas eA wird abgeführt.

Ein Teilstrom T des Abgases A des Verbrennungsmotors 38 wird über die Abgasrückführung 40 dem Wärmeübertrager 1 zugeführt und dort mittels der von der Luftzuführung 42 abgezweigten Luft L gekühlt und als gekühltes Abgas gA strömungseingangsseitig dem Verbrennungsmotor 38 zugeführt. Zur Steuerung der Menge des abgezweigten Teilstroms T des Abgases A ist in der Abgasrückführung ein Ventil 50, z. B. ein Rückschlag- oder ein Regelventil, angeordnet. Als Kühlmedium für das Abgas A wird dem Wärmeübertrager 1 sekundärseitig die abgezweigte Luft L zugeführt, die zwar heißer als Frisch- oder Umgebungsluft ist, die aber kälter als das rückgeführte Abgas A ist. Die aus dem Wärmeübertrager 1 austretende, aufgewärmte Luft aL wird über eine Leitung 52 dem aus dem Verbrennungsmotor 38 kommenden Abgas A zugemischt. Zur Steuerung der Menge der durch den Wärmeübertrager 1 sekundärseitig strömenden Luft L ist in der Leitung 52 ein weiteres Ventil 54, z. B. ein Regel- oder Rückschlagventil, angeordnet.

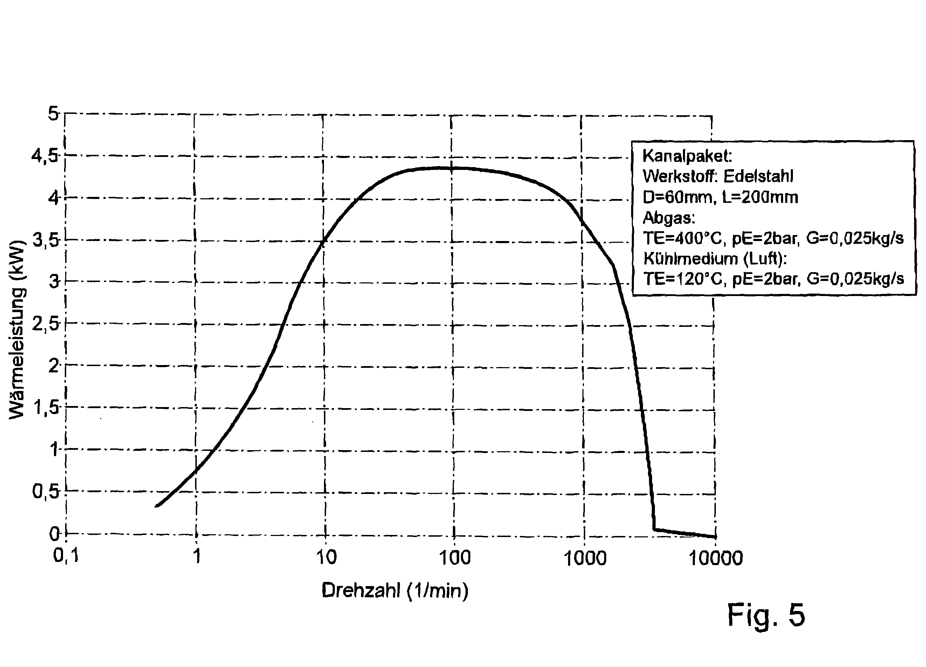

Der Wärmeübertrager 1 ist ein regenerativer Wänneübertrager in der bereits oben beschriebenen Art und Weise. Die Steuerung und/oder Regelung des Wärmeübertragers 1 erfolgt dabei wie bereits oben beschrieben durch Änderung der Drehzahl n der rotierenden Kanäle K. In Fig. 5 ist ein Diagramm zur Regelung der Wärmeleistung in Abhängigkeit von der Drehzahl n des rotierbaren Zylinders 4 des Wärmeübertragers 1 dargestellt.

Bei einem stehenden Zylinder 4 und einer Drehzahl n von null wirken die ebenfalls stehenden Kanalbündel K1 und K2 wie ein integrierter Bypass, d. h. es wird keine Wärme, übertragen. Die Luft L und das Abgas A werden parallel zueinander in dem jeweiligen Kanalbündel K1 bzw. K2 geführt.

Mit steigender Drehzahl n nimmt die übertragende Wärmemenge und somit die Wärmeleistung zu, bis sie einen Maximalwert erreicht. Bei hohen Drehzahlen n tritt eine starke Vermischung der Ströme des Abgases A und der Luft L auf, weil die Drehbewegung der Kanalbündel K1 und K2 auch das in den Kanälen K enthaltene Gasvolumen mitschleppt. Die übertragenen Wärmemenge und somit die Wärmeleistung wird dadurch negativ beeinflusst. Bei sehr hohen Drehzahlen n geht sie gegen null.

Für den Fall, dass es sich bei den beiden Ventilen 50, 54 gemäß Fig. 4 um Regelventile handelt, ist es vorteilhaft deren Betätigung zu koppeln. Die Koppelung der beiden Ventile 50 und 54 stellt sicher, dass bei einem bestimmten Teilstrom T des rückgeführten Abgases A immer ein hinreichend großer Strom an Luft L durch den Wärmeübertrager 1 oder Abgaskühler geführt wird. Beispielsweise können beide Ströme gleich groß eingestellt werden. Hierdurch ist sichergestellt, dass es zu keiner Überhitzung des Wärmeübertragers 1 kommt. Zudem sind die Ströme in der Verdichterstufe 48a und der Turbinenstufe 48b des Abgasturboladers 48 im Wesentlichen gleich groß und unabhängig von der Rückführmenge.

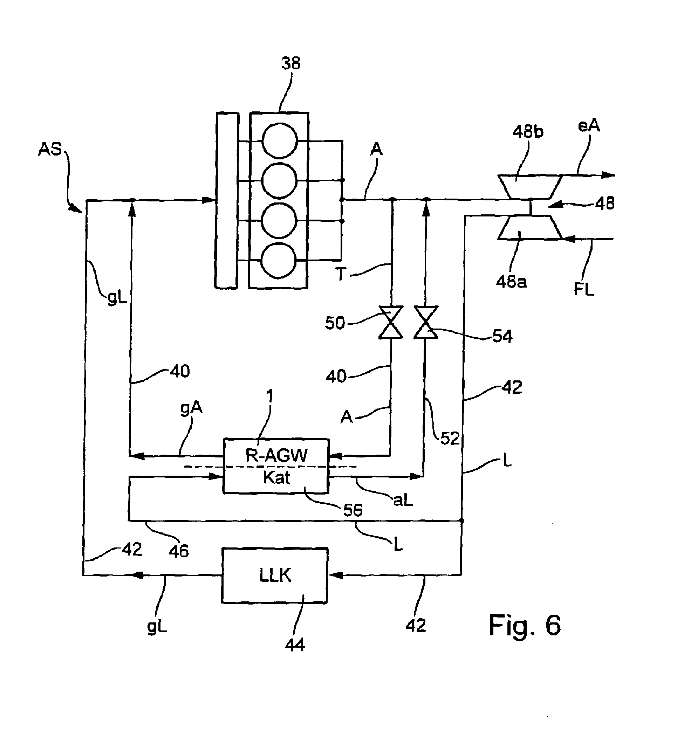

Fig. 6 zeigt schematisch einen alternativen Kühlkreislauf für das Abgas A und das Ansaugluft- und Abgassystem AS des Verbrennungsmotors 38 mit einem in der Abgasrückführung 40 angeordneten alternativen Wärmeübertrager 1. Der Wärmeübertrager 1 ist gegenüber dem Wärmeübertrager gemäß Fig. 4 mit einer katalytischen Beschichtung 56 versehen. Insbesondere ist die Innenwandung der Kanäle K mit der katalytischen Beschichtung 56 versehen. Die katalytische Beschichtung 56 dient dazu, die im Abgasstrom vorhandenen Anteile an Rußpartikeln, Kohlenwasserstoffen und Kohlenmonoxid zu oxidieren. Zu diesem Zweck bindet und aktiviert die katalytische Beschichtung 56 der Kanäle K Sauerstoffmoleküle während der Zeitspanne, in der die Kanäle K vom Kühlmediumstrom, d. h. von Luft L, durchströmt werden. In der darauffolgenden Zeitspanne, in der die Kanäle K vom Abgas A durchströmt werden, verbindet sich der aktivierte Sauerstoff mit den oxidierbaren Kohlenstoffanteilen im Abgasstrom.

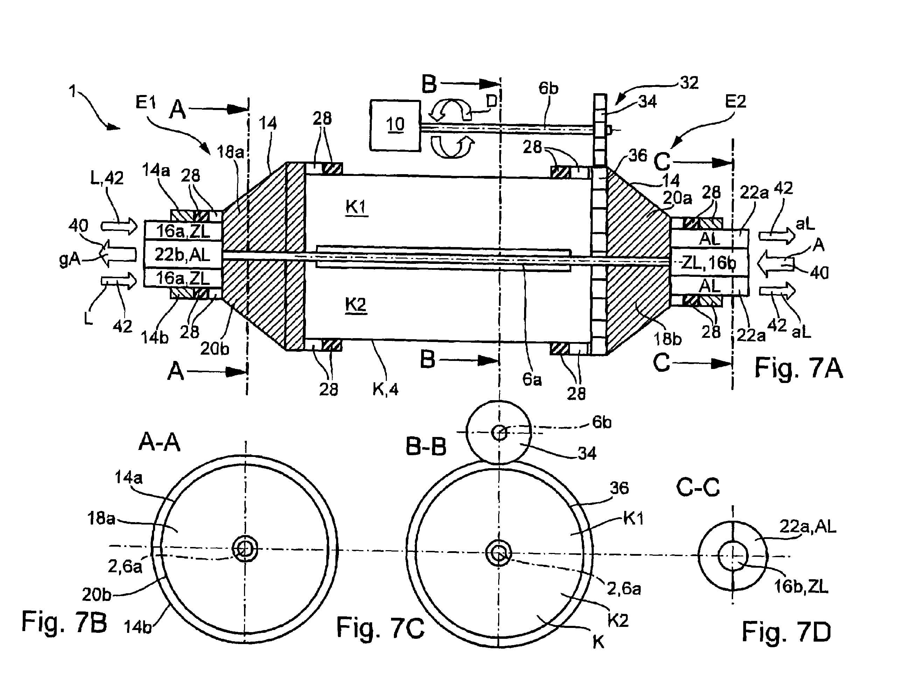

Fig. 7A zeigt eine weitere alternative Ausführungsform für einen Wärmeübertrager 1 zur Kühlung von Abgas A. Im Unterschied zu den oben beschriebenen Wärmeübertragern mit rotierbaren Kanälen K sind beim Wärmeübertrager 1 gemäß Fig. 7A der Zylinder 4 und somit die Kanäle K und die Kanalbündel K1 und K2 stehend ausgeführt. Im Anschlussbereich E1 und E2 sind die jeweils vorgesehenen Anschlussstutzen 16a bzw. 16b und Austrittsstutzen 22a bzw. 22b sowie der betreffende Diffusor 18a bzw. 18b und der betreffende Sammler 20a bzw. 20b rotierbar angeordnet. Je nach Art und Ausführung kann ein zahnradgesteuerter Antrieb 32 (wie dargestellt) oder einen riemengesteuerter Antrieb vorgesehen sein. Anstelle von einer Luftzuführung 42 und einer Abgasrückführung 40, die jeweils an entgegen gesetzten Enden in den Wärmeübertrager 1 münden und auf der jeweils gegenüber liegenden Ende abgeführt werden, sind im Ausführungsbeispiel nach Fig. 7A entweder zwei Abgasrückführungen 40 und eine Luftzuführung 42 oder eine Abgasrückführung 40 und zwei Luftzuführungen 42 (wie dargestellt) vorgesehen, um eine Durchströmung des Wärmeübertragers 1 wie oben beschrieben mit wechselnder Luftdurchströmung oder Abgasdurchströmung zu bewirken. Figuren 7B bis 7D zeigen verschiedene Querschnitte durch den Wärmeübertrager 1 gemäß Fig. 7A.

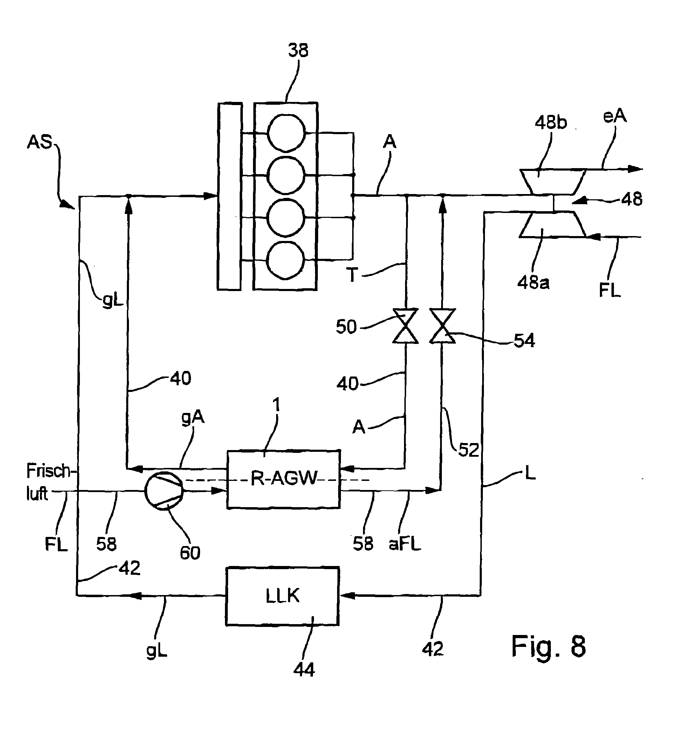

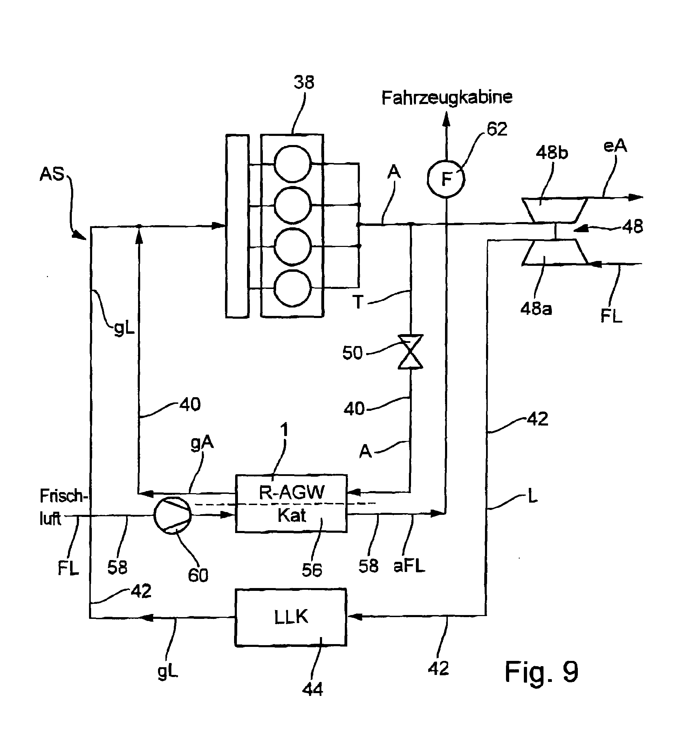

Figuren 8 und 9 zeigen schematisch weitere alternative Ansaugluft- und Abgassysteme AS eines Verbrennungsmotors 38 mit einem in einer Abgasrückführung 40 primärseitig angeordneten Wärmeübertrager 1, der sekundärseitig in einer Frischluftzuführung 58 angeordnet ist. Anstelle der Kühlung des zumindest teilweise rückgeführten Abgases A mit Ladeluft des Abgasturboladers 48 wird das Abgas A direkt mittels zugeführter Frischluft FL gekühlt. Zweckmäßigerweise wird die Frischluft FL, um höhere Druckdifferenzen zu vermeiden, vor der Zuführung in den Wärmeübertrager 1 mittels eines Verdichters 60 verdichtet. Die mittels des Wärmeübertragers 1 indirekt aufgewärmte Frischluft aFL wird anschließend dem Abgasstrom zugemischt. Der Wärmeübertrager 1 kann dabei in einer der oben beschriebenen Form ausgebildet sein. In Fig. 8 ist der Wärmeübertrager 1 nicht katalytisch beschichtet, in Fig. 9 ist der Wärmeübertrager 1, insbesondere dessen Kanäle K, mit der katalytischen Beschichtung 56, wie oben bereits dargelegt, versehen. Zudem wird die aufgewärmte Frischluft aFL dem Fahrzeuginnenraum zugeführt. Die katalytische Beschichtung 56 des Wärmeübertragers 1 und ein strömungsausgangsseitig angeordnetes Filter 62 sorgen für die Schadstofffreiheit der in den Fahrzeuginnenraum strömenden aufgewärmten Frischluft aFL.

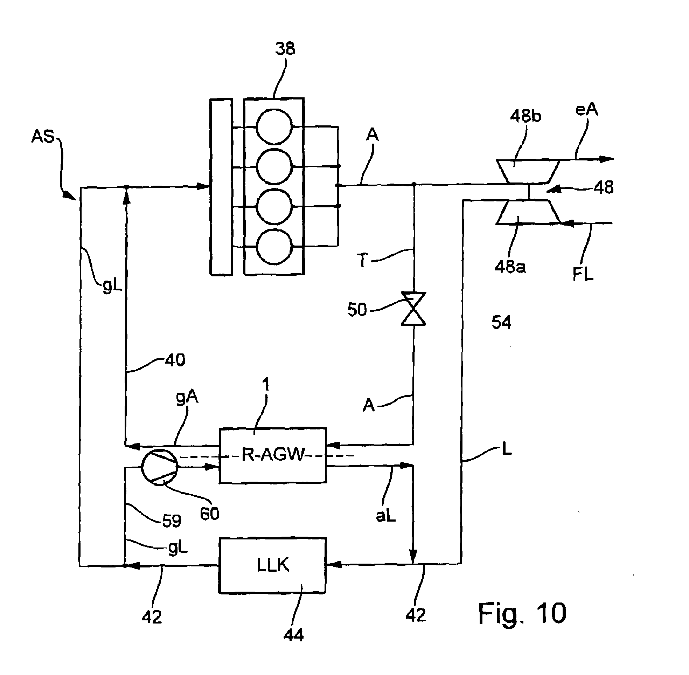

Fig. 10 zeigt schematisch ein weiteres alternatives Ansaugluft- und Abgassystem AS eines Verbrennungsmotors 38 mit einem in einer Abgasrückführung 40 primärseitig angeordneten Wärmeübertrager 1, der sekundärseitig in einer Luftrückführung 59 der Luftzuführung 42 angeordnet ist. Dabei wird die Luft L, z. B. Ladeluft, erst nach dem Ladeluftkühler 44 abgezweigt und dem Wärmeübertrager 1 als Kühlmedium in Form von gekühlter Luft gL zugeführt. Je nach Art und Aufbau kann die gekühlte Luft gL vor Zuführung in den Wärmeübertrager 1 mittels eines Verdichters 60 verdichtet werden.

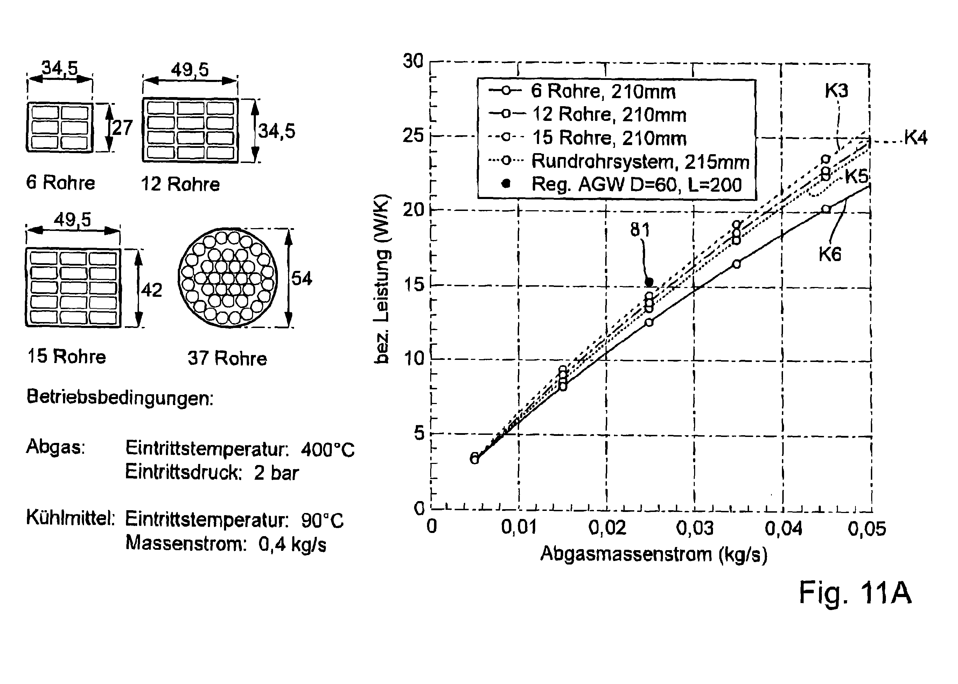

Fig. 11A zeigt beispielhaft ein Diagramm mit mehreren Wärmeleistungs-Abgasmassenstrom-Funktionen für verschieden ausgebildete Wärmeübertrager nach dem Stand der Technik im Vergleich mit einem Wärmeübertrager gemäß der oben beschriebenen Funktionsweise (P1).

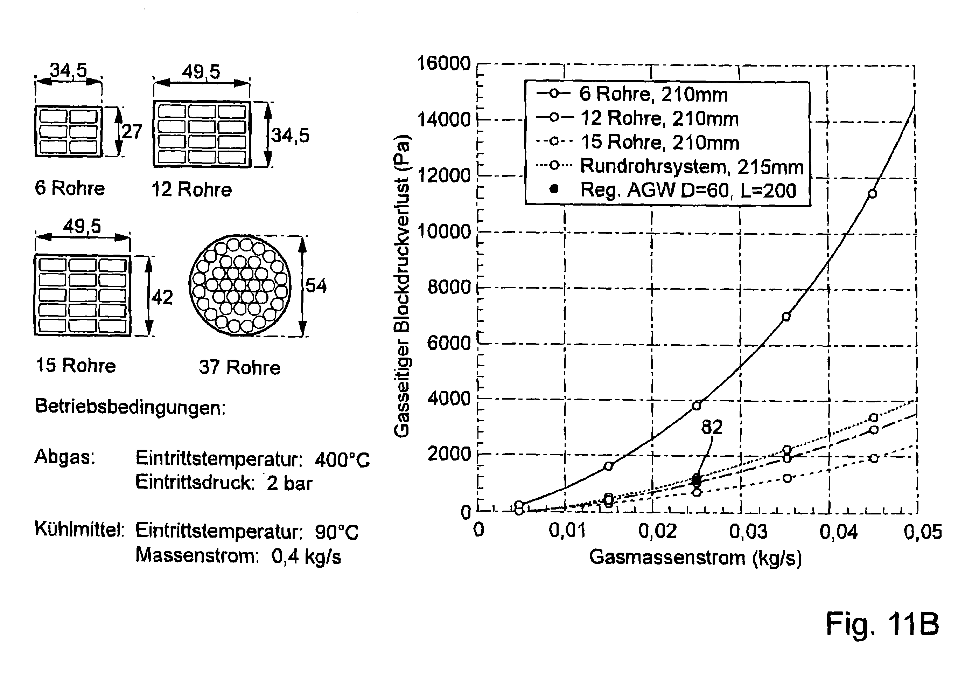

Fig. 11 B zeigt beispielhaft ein Diagramm mit mehreren Druck-Abgasmassenstrom-Funktionen für verschieden ausgebildete Wärmeübertrager nach dem Stand der Technik im Vergleich mit einem Wärmeübertrager gemäß der oben beschriebenen Funktionsweise (P2).

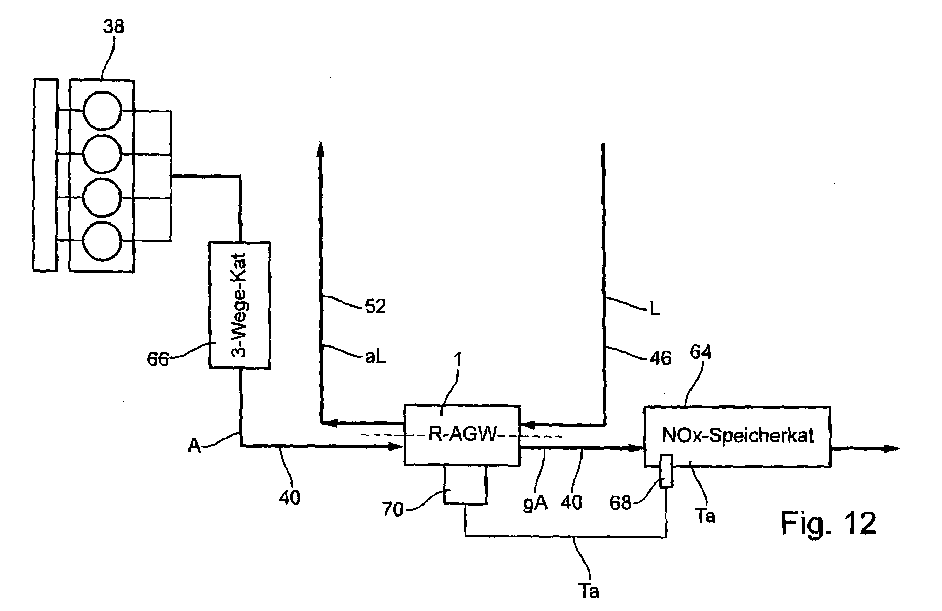

Die Figuren 12 bis 15 zeigen weitere alternative Ausführungsformen für einen Wärmeübertrager 1 mit einem Speicherkatalysator 64.

Dabei ist in der Abgasrückführung 40 dem Wärmeübertrager 1 ein herkömmlicher Katalysator 66, z. B. ein so genannter 3-Wege-Katalysator, vorgeschaltet und der Speicherkatalysator 64, z. B. ein NOx-Speicherkatalysator, nachgeschaltet. Durch den herkömmlichen Katalysator 66 wird eine Oxidierung von HC- und CO-Emissionen in Kohlendioxid und Wasserdampf ausgeführt, so dass HC und CO hinreichend gut abgebaut werden. Für eine Stickstoffoxid-Reduzierung ist der nachgeschaltete Speicherkatalysator 64 vorgesehen. Die Effizienz der Umwandlung von Stickstoffoxiden NOx hängt maßgeblich von der Temperatur Ta des Speicherkatalysators 64 ab. Dabei kann es bei zu hohen Temperaturen Ta, z. B. von 750°C bis 800°C, zu einer thermischen Schädigung des Speicherkatalysators 64 kommen. Bedingt durch die hohen Abgastemperaturen bei voller Motorbelastung, welche in dem Bereich einer möglichen thermischen Schädigung liegen, wird daher die Temperatur Ta am Speicherkatalysator 64 mittels eines Temperatursensors 68 erfasst, einem Steuergerät 70 des Wärmeübertragers 1 zugeführt und zur Regelung der Motordrehzahl verwendet, so dass daraus resultierend wiederum der Temperaturbereich am Speicherkatalysator 64 einstellbar ist. Mit anderen Worten: Der Temperaturbereich des Speicherkatalysators 64 wird in einfacher Art und Weise durch eine variabel einstellbare Rotationsgeschwindigkeit eingestellt bzw. geregelt.

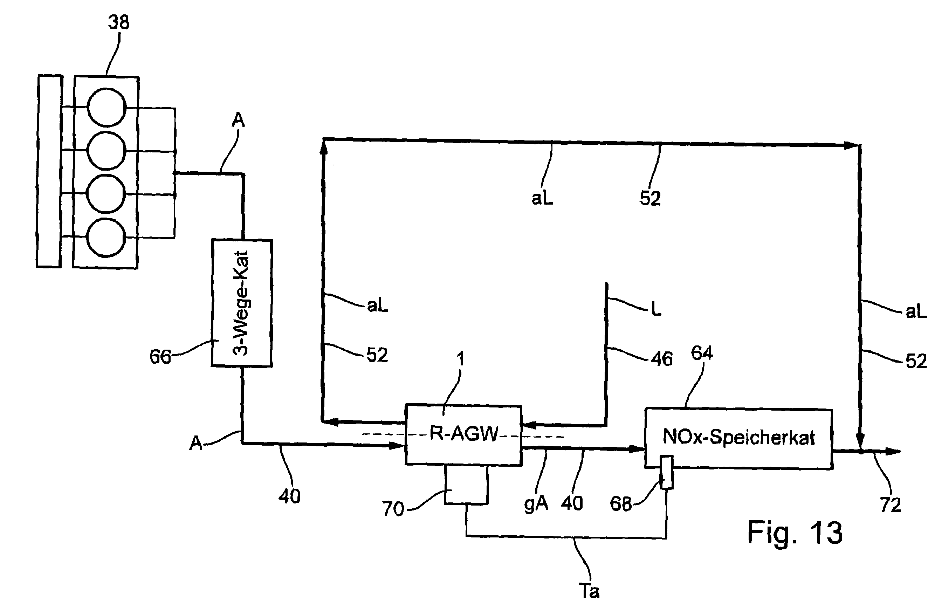

Figur 13 zeigt die Zuführung der aufgewärmten Luft aL des Wärmeübertragers 1 in eine Abgangsleitung 72 des Speicherkatalysators 64.

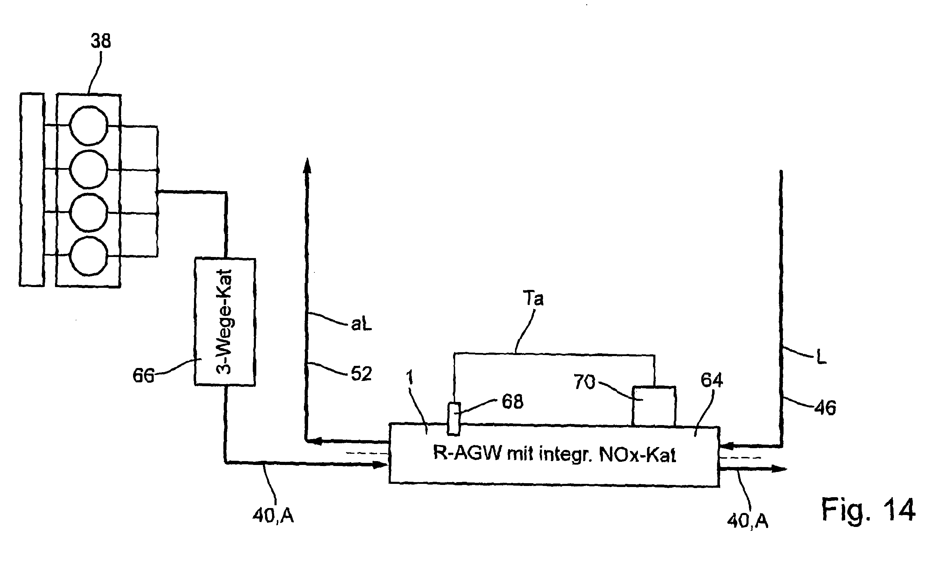

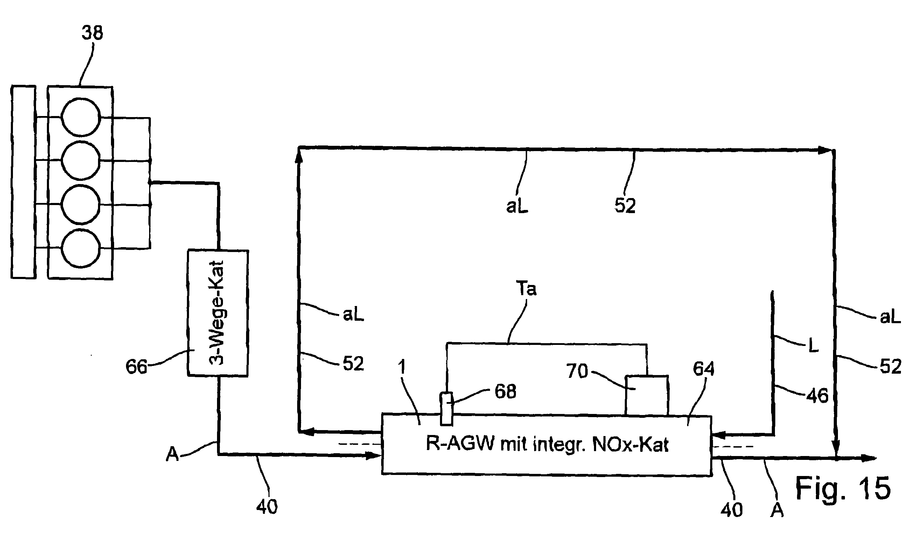

Alternativ zur abgasseitigen Anordnung des Speicherkatalysators 64, insbesondere eines NOx-Katalysator, nach dem Wärmeübertrager 1 kann der Speicherkatalysator 64 im Wärmeübertrager 1 integriert sein, wie dies in den Figuren 14 und 15 dargestellt ist. Bei diesen Ausführungsformen wurde zugrunde gelegt, dass die Trägerstruktur bzw. das Kanalpaket des Speicherkatalysators 64 identisch ist mit der Trägerstruktur bzw. dem Kanalpaket des regenerativen Wärmeübertrager 1, so dass diese kombiniert, insbesondere in integrierter Bauweise ausgeführt werden können. Dabei wird mittels der Temperatur Ta gesteuerten Drehzahl- oder Rotationsgeschwindigkeits-Regelung des Wärmeübertragers 1 bzw. des Speicherkatalysators 64 der vorgegebene Temperaturbereich am Speicherkatalysator 64 eingestellt.

Zusammenfassend weist ein als regenerativer Wärmeübertrager 1 ausgebildeter Abgaskühler für einen Verbrennungsmotor 38 eines Fahrzeugs ein geringes Gewicht, geringe Thermospannungen auf. Zudem ist der Wärmeübertrager 1 besonders betriebssicher und stellt keine zusätzliche Wärmelast im Kühlmittelkreislauf dar. Die Kühlleistung ist besonders einfach über die Drehzahl n regelbar. Insbesondere ist die Funktion eines regelbaren, abgasseitigen Bypasses integriert.

### Bezugszeichenliste

- 1: Wärmeübertrager
- 1a, 1b: Kanalbündel
- 2: Achse
- 4: Zylinder
- 6a: erste Welle des Zylinders 4
- 6b: zweite Welle des Zylinders 4
- 8: zahnriemengesteuerter Antrieb
- 10: Motor
- 12: Riemen
- 14: Gehäuse
- 14a: obere Gehäusehälfte
- 14b: obere Gehäusehälfte
- 16a, 16b: Anschlussstutzen
- 18a, 18b: Diffusor
- 20a, 20b: Sammler
- 22a, 22b: Austrittsstutzen
- 24: Ringdichtungen
- 26: Dichtung
- 28: Wellendichtung
- 30: Durchtritt
- 32: zahnradgesteuerter Antrieb
- 34: Zahnrad
- 36: Zahnkranz
- 38: Verbrennungsmotor
- 40: Abgasrückführung
- 42: Luftzuführung
- 44: Ladeluftkühler
- 46: Abzweigleitung
- 48: Abgasturbolader
- 48a: Verdichterstufe
- 48b: Turbinenstufe
- 50: Ventil
- 52: Leitung
- 54: Ventil
- 56: katalytische Beschichtung
- 58: Frischluftzuführung
- 59: Luftrückführung
- 60: Verdichter
- 62: Filter
- 64: Speicherkatalysator, z. B. NOx-Katalysator
- 66: Katalysator, z. B. 3-Wege-Katalysator
- 68: Temperatursensor
- 70: Steuergerät
- 72: Abgangsleitung

- A: heißes Abgas
- aFL: aufgewärmte Frischluft
- aL: aufgewärmte Luft
- AL: Abführungen
- AS: Ansaugluft- und Abgassysteme
- D: Drehbewegung
- eA: entspanntes Abgas
- E1, E2: Anschlussbereich
- FL: Frischluft
- gA: gekühltes Abgas
- gL: Ladeluft / gekühlte Luft
- K: Kanäle
- K1. K2: Kanalbündel
- L: kalte Luft (Kühlmedium)
- L1: durchgezogene Kennlinie
- L2: gestrichelte Kennlinie
- n: Drehzahl
- 1/2n: Zeitdauer
- T: Teilstrom
- Ta: Temperatur
- W: Kanalwände
- ZL: Zuführungen

## Patentansprüche

1. Verfahren zum Kühlen von Abgas (A) eines Verbrennungsmotors (38) eines Fahrzeugs, wobei das Abgas (A) mittels eines Wärmeübertragers (1) indirekt luftgekühlt wird.

2. Verfahren nach Anspruch 1, bei dem das Abgas (A) durch regenerative Wärmeübertragung über Kanalwänden (W) des Wärmeübertragers (1) gekühlt wird.

3. Verfahren nach Anspruch 1 oder 2, bei dem der Wärmeübertrager (1) alternierend vom Abgas (A) oder von Luft (L) durchströmt wird.

4. Verfahren nach einem der Ansprüche 1 bis 3, bei dem der Wärmeübertrager (4) bereichsweise vom Abgas (A) oder von Luft (L) durchströmt wird.

5. Verfahren nach einem der Ansprüche 1 bis 4, bei dem als Luft (L) Ladeluft oder Frischluft (FL) verwendet wird.

6. Verfahren nach Anspruch 5, bei dem die Frischluft (FL) komprimiert bzw. gefördert wird.

7. Verfahren nach Anspruch 5 oder 6, bei dem die Ladeluft (L) gekühlt wird.

8. Verfahren nach einem der Ansprüche 1 bis 7, bei dem die vom Abgas (A) aufgewärmte Luft (aL) dem Fahrzeuginnenraum zur Beheizung zugeführt wird.

9. Verfahren nach einem der Ansprüche 1 bis 8, bei dem der Wärmeübertrager (1) einen eine Vielzahl von Kanälen (K) umfassenden Zylinder (4) aufweist, der mit einer vorgegebenen Drehzahl (n) um eine Achse (2) rotiert.

10. Verfahren nach Anspruch 9, bei dem die übertragene Wärmemenge in Abhängigkeit von der Drehzahl (n) des rotierenden Zylinders (2) gesteuert wird.

11. Verfahren nach einem der Ansprüche 1 bis 8, bei dem der Wärmeübertrager (1) einen eine Vielzahl von Kanälen (K) umfassenden Zylinder (4) aufweist, der statisch angeordnet ist, wobei endseitig jeweils angeordnete Zuführungen (ZL) und Abführungen (AL) für die Luft (L, aL) und das Abgas (A, gA) mit einer vorgegebenen Drehzahl (n) synchron um eine Achse (2) rotieren.

12. Verfahren nach Anspruch 11, bei dem die übertragene Wärmemenge in Abhängigkeit von der Drehzahl (n) der rotierenden Zuführungen (ZL) und Abführungen (AL) gesteuert wird.

13. Verfahren nach einem der Ansprüche 1 bis 12, bei dem abgasseitig dem Wärmeübertrager (1) ein Speicherkatalysator (64), insbesondere ein NOx-Katalysator, nachgeschaltet wird.

14. Verfahren nach einem der Ansprüche 1 bis 13, bei dem im Wärmeübertrager (1) ein Speicherkatalysator (64), insbesondere ein NOx-Katalysator, integriert wird.

15. Verfahren nach Anspruch 13 oder 14, bei dem der Speicherkatalysator (64) Temperatur (Ta) und/oder Drehzahl (n) geregelt wird.

16. Verfahren nach Anspruch 15, bei dem die Temperaturregelung einer Regelung der Motordrehzahl unterlagert wird.

17. Wärmeübertrager (1) zum Kühlen von Abgas (A) eines Verbrennungsmotors (38) eines Fahrzeugs, mit einem Wärmeübertragungsbereich, der primärseitig in einer Abgasrückführung (40) und sekundärseitig in einer Luftzuführung (42) des Verbrennungsmotors (38) angeordnet ist.

18. Wärmeübertrager (1) nach Anspruch 17, bei dem der Wärmeübertragungsbereich durch einen Zylinder (4) mit einer Vielzahl von Kanälen (K) gebildet ist, über deren Kanalwände (W) das Abgas (A) durch regenerative Wärmeübertragung kühlbar ist.

19. Wärmeübertrager (1) nach Anspruch 17 oder 18, bei dem die Kanäle (K) im Zylinder (4) parallel zueinander angeordnet sind und entlang der Strömungsrichtung verlaufen.

20. Wärmeübertrager (1) nach Anspruch 18 oder 19, bei dem der Zylinder (4) strömungseingangsseitig und strömungssausgangsseitig mit Zuführungen (ZL) bzw. Abführungen (AL) für das Abgas (A, gA) und die Luft (L, aL) versehen ist.

21. Wärmeübertrager (1) nach einem der Ansprüche 18 bis 20, bei dem die Kanäle (K) alternierend vom Abgas (A) oder von Luft (L) durchströmbar sind.

22. Wärmeübertrager (1) nach einem der Ansprüche 18 bis 21, bei dem der Zylinder (L) um eine Längsachse (2) rotierbar angeordnet ist.

23. Wärmeübertrager (1) nach einem der Ansprüche 18 bis 22, bei dem der Zylinder (4) über einen riemengesteuerten Antrieb (8) in eine Drehbewegung versetzbar ist.

24. Wärmeübertrager (1) nach Anspruch 23, bei dem der riemengesteuerte Antrieb (8) einen Motor (10) zur Ansteuerung einer Welle (6b) umfasst, die mit einen den Zylinder (4) umgebenden Riemen (12) verbunden ist.

25. Wärmeübertrager (1) nach einem der Ansprüche 18 bis 22, bei dem der Zylinder (4) über einen zahnradgesteuerten Antrieb (32) in eine Drehbewegung versetzbar ist.

26. Wärmeübertrager (1) nach Anspruch 25, bei dem der zahnradgesteuerte Antrieb (32) einen Motor (38) zur Ansteuerung einer Welle (6b) umfasst, die mit einem Zahnrad (34) versehen ist, das in einen den Zylinder (4) umgebenden Zahnkranz (36) eingreift.

27. Wärmeübertrager (1) nach einem der Ansprüche 18 bis 21, bei dem der Zylinder (4) stehend ausgebildet ist, wobei die Zuführungen (ZL) und Abführungen (AL) um eine Drehachse (2) rotierbar angeordnet sind.

28. Wärmeübertrager (1) nach einem der Ansprüche 18 bis 27, bei dem dem Zylinder (4) Frischluft (FL) oder Ladeluft zuführbar ist.

29. Wärmeübertrager (1) nach einem der Ansprüche 18 bis 28, bei dem dem Zylinder (4) verdichtete Frischluft (FL) zuführbar ist.

30. Wärmeübertrager (1) nach einem der Ansprüche 18 bis 29, bei dem dem Zylinder (4) gekühlte Ladeluft (gL) zuführbar ist.

31. Wärmeübertrager (1) nach einem der Ansprüche 17 bis 30, bei dem abgasseitig ein Bypass in der Abgasrückführung (40) integriert ist.

32. Wärmeübertrager (1) nach einem der Ansprüche 17 bis 31, bei dem abgasseitig dem Wärmeübertrager (1) ein Speicherkatalysator (64), insbesondere ein NOx-Katalysator, nachgeschaltet ist.

33. Wärmeübertrager (1) nach einem der Ansprüche 17 bis 31, mit einem integrierten Speicherkatalysator (64), insbesondere ein NOx-Katalysator.

34. Wärmeübertrager (1) nach einem der Ansprüche 17 bis 33, bei dem der Speicherkatalysator (64) Temperatur (Ta) und/oder Drehzahl (n) geregelt wird.

35. Wärmeübertrager (1) nach Anspruch 34, bei dem die Temperaturregelung einer Regelung der Motordrehzahl unterlagert wird.
